# EUROPÄISCHE PATENTSCHRIFT

(11) **EP 2 930 662 B1**
(45) Veröffentlichungstag und Bekanntmachung des Hinweises auf die Patenterteilung: **31.10.2018**
(21) Anmeldenummer: 15162261.0
(22) Anmeldetag: 01.04.2015
(51) Int. Cl.: G06K 19/06, G01N 15/14

(54) **STRICHCODETRÄGERPARTIKEL, HERSTELLUNG UND VERWENDUNG**
BAR CODE HOLDER PARTICLE, PREPARATION AND USE
PARTICULE DE SUPPORT DE CODE BARRE, FABRICATION ET UTILISATION

(30) Priorität: 11.04.2014 DE 102014005685
(43) Veröffentlichungstag der Anmeldung: 14.10.2015
(73) Patentinhaber: Bundesrepublik Deutschland, vertreten durch den Bundesminister für Wirtschaft und Energie, dieser vertreten durch den Präsidenten der, 12205 Berlin (DE)
(72) Erfinder: Beck, Dr. Uwe, 14612 Falkensee (DE)
(74) Vertreter: Zimmermann & Partner Patentanwälte mbB

(56) Entgegenhaltungen:
- EP-A1- 2 688 011
- EP-A2- 0 472 842
- EP-A2- 1 925 696
- DE-A1- 2 607 014
- US-A1- 2002 104 762
- US-A1- 2008 029 300
- US-A1- 2012 231 453
- NICEWARNER-PENA S R ET AL: "SUBMICROMETER METALLIC BARCODES", SCIENCE, AMERICAN ASSOCIATION FOR THE ADVANCEMENT OF SCIENCE, US, Bd. 294, Nr. 5540, 5. Oktober 2001 (2001-10-05), Seiten 137-141, XP001128112, ISSN: 0036-8075, DOI: 10.1126/SCIENCE.294.5540.137
- Kenji Imakita ET AL: "Numerical analysis on the feasibility of a multi-layered dielectric sphere as a three-dimensional photonic crystal", Optics Express, vol. 21, no. 9, 6 May 2013 (2013-05-06), pages 10651-10658, XP55344857, ISSN: 2161-2072, DOI: 10.1364/OE.21.010651

## Beschreibung

Die Erfindung betrifft die Markierung von Erzeugnissen und die Markierung von Zwischenprodukten bei der Herstellung von Erzeugnissen und dient der zweifelsfreien Identifikation des jeweils gekennzeichneten Objekts mit Hilfe eines maschinell lesbaren Codes.

Gegenwärtig ist eine Vielzahl materialbasierter Möglichkeiten bekannt, ein Produkt durch eine weitestgehend fälschungssichere oder die Fälschung erheblich erschwerende Markierung zu kennzeichnen oder von äußerlich ähnlichen Produkten unterscheidbar zu machen. Diese Merkmale werden unter den Sammelbegriffen "embedded identity, embedded verification, embedded authentication" oder auch, gewissermaßen als Oberbegriff zu verstehen "embedded security" zusammengefasst. Beispiele sind: mit dem Produkt verbundene RFID-Chips (makroskopisch); offen aufgebrachte Hologramme (makroskopisch); in das Produkt, z.B. eine Banknote, eingebettete Fluoreszenzmarker (makro- und mikroskopisch); die der vorliegenden Erfindung am nächsten kommenden mikroskopisch kleinen ID-Partikel "SECUTAG ®" der Fa. 3S SIMONS SECURITY SYSTEMS GmbH / Nottuln (mikroskopisch); oder beispielsweise künstliche DNS (nanoskopisch). In US 2012/231453 A1 sind sogenannte Brown'sche Mikro-Strichcodes für Bioassays beschrieben, die basierend auf Siliziumwafern mittels MEMS-Technologie, beispielsweise mittels CMOS-Technik, herstellbar sind. Von Kenji Imakita et al. (2013) wird in Optics Express, 21(9), Seiten 10651-10658 die numerische Analyse der Eignung einer dielektrischen Multilagen-Kugel als drei-dimensionaler photonischer Kristall beschrieben. US 2008/029300 A1 beschreibt isolierende magnetische Metallpartikel und ein Verfahren zur Herstellung von isolierendem magnetischem Material. Von DE 2607014 A1 wird ein sphärisch ausgeführtes Mikroteilchen offenbart.

Bei allen bekannten Lösungen handelt es sich bei der Markierung um zusätzlich bzw. nachträglich auf oder in ein Erzeugnis an- bzw. eingebrachte Objekte. Die Verteilung dieser Objekte ist in aller Regel auf einen bestimmten, stark eingegrenzten Ort beschränkt. Dieser eingegrenzte Ort kann ein spezifisches Merkmal, beispielsweise ein Typenschild oder eine spezifische Seite eines Typenschilds sein. Typischerweise ist die erreichbare Informationstiefe stark beschränkt. Beispielsweise werden RFID-Chips an der Kasse eines Warenhauses lediglich vom Zustand "nicht bezahlt" in den Zustand "bezahlt" gesetzt. Auch in Wertpapieren, z.B. Geldscheinen geht es bei UV-aktiven Fluoreszenzmarkern um die alternativen Merkmale "vorhanden" oder "nicht vorhanden".

Bei den mikroskopisch vergleichsweise großen Objekten, die unter dem Namen SECUTAGs kommerziell erhältlich sind, wird auf Basis eines produktspezifischen Farbcodes an einer bestimmten Stelle des Produkts, z.B. in einem aufgedruckten Logo, eine statistisch signifikante Menge der SECUTAGS aufgebracht und deren stochastisches Lageverteilungsbild für eine zusätzliche artikelbezogene Identifikation genutzt. Ebenso kann auch künstliche DNS großflächig aufgebracht werden, ist allerdings typischerweise abwaschbar.

Vor diesem Hintergrund wird ein mikropartikulärer Strichcodeträger, umfassend konzentrisch zueinander angeordnete Dünnschichten gemäß Anspruch 1, ein Verfahren zur Kennzeichnung eines Erzeugnisses gemäß Anspruch 12 ein Verfahren zur Erzeugung eines Strichcodeträgerpartikels nach Anspruch 14 und ein Verfahren zur Verifizierung der Authentizität eines Erzeugnisses nach Anspruch 18, die Verwendung eines Strichcodeträgerpartikels nach Anspruch 21 und eine Funktionsschicht nach Anspruch 22 vorgeschlagen. Weitere Ausführungsformen, Modifikationen und Verbesserungen ergeben sich anhand der folgenden Beschreibung und der beigefügten Ansprüche.

Gemäß einer ersten Ausführungsform wird ein Strichcodeträgerpartikel vorgeschlagen, das einen Verbund von Dünnschichten L1, L2, L3 ... vorbestimmter Dicke umfasst, wobei sich zwei benachbarte Schichten L1/L2; L2/L3; L3/L4;... in einer maschinell auslesbaren Eigenschaft unterscheiden, sodass ein Querschnitt durch den Verbund der Dünnschichten eine Abfolge von Strichen vorbestimmter Breite ergibt. Diese Abfolge von Strichen mit jeweils vorbestimmter Breite repräsentiert einen Strichcode. Unter einem maschinellen Auslesen wird in diesem Zusammenhang das Aufnehmen bzw. Erfassen und/oder Speichern mit einer Bildaufnahmeeinheit verstanden, die eingerichtet ist, den Strichcode als kontrastreiches mit einer Ausgabeeinheit wiedergeben werden können. Hierbei versteht es sich von selbst, dass der Strichcode durch den stoffschlüssigen Verbund zueinander benachbarter Schichten verwirklicht ist. Die Abfolge jeweils spezifisch dicker Schichten, die im Partikelquerschnitt betrachtet als benachbarte Striche oder Bänder mit alternierender Helligkeit erscheinen, dient als Strichcode.

Vorteile dieser Ausführungsform ergeben sich aus der Umsetzung eines Strichcodes im Submikrometer- und Nanometerbereich. Ein solcher Strichcode bleibt dem unbewaffneten Auge verborgen. Beispielsweise kann der Strichcode bzw. das Strichcodeträgerpartikel ein Sicherheitsmerkmal sein. Das Merkmal kann die Fälschungssicherheit eines mit dem Strichcodeträger ausgestatteten Produkts steigern. Das Fehlen der Strichcodeträger an einer vorgegebenen Stelle eines ansonsten ähnlichen oder identischen Erzeugnisses zeigt beispielsweise an, dass es sich nicht um das betreffende Erzeugnis handelt. Beispielsweise kann es sich dann um eine unerlaubte Kopie des Erzeugnisses handeln. Ebenso kann es sich um ein anderes, nur äußerlich ähnliches Erzeugnis oder Zwischenprodukt handeln, das nicht mit dem speziell gekennzeichneten Erzeugnis oder Zwischenprodukt verwechselt werden soll. Derartige Verwechslungen sollen beispielsweise in komplexen Prozessabläufen vermieden werden.

Gemäß einer weiteren Ausführungsform wird ein Strichcodeträgerpartikel vorgeschlagen, wobei die maschinell auslesbare Eigenschaft auf einer Wechselwirkung von Photonen, Elektronen und/oder Röntgenstrahlung mit den Dünnschichten basiert.

Vorteile ergeben sich aus der Verwendbarkeit von optischen oder elektronenoptischen Systemen zum Auslesen des Codes. Derartige Systeme haben die geforderte Auflösung, beispielsweise SNOM, REM, AFM und sind so anpassbar, dass kontraststarke Abbildungen des Strichcodes aufgenommen und zur weiteren Prozessierung gespeichert werden können.

Gemäß einer weiteren Ausführungsform wird ein Strichcodeträgerpartikel vorgeschlagen, dessen maschinell auslesbare Eigenschaft ausgewählt ist unter und/oder zurückführbar ist auf: Absorption, Brechungsindex, chemische Zusammensetzung, Dichte, Dielektrizitätsindex, elektrische Leitfähigkeit, Elektronenbeugung, Elektronendichte, Emission, Fluoreszenz, Fluoreszenzquantenausbeute, Kristallinität, Kristallstruktur, magnetische Susceptibilität, Polarisation, Reflektivität, Transmission zumindest einer der Dünnschichten.

Vorteile dieser Ausführungsformen ergeben sich daraus, dass die genannten Eigenschaften bei Wahl eines hochauflösenden Messgerätes, beispielsweise eines geeigneten Mikroskops mit einer angepassten Optik und geeigneten Detektoren die maschinell auslesbare Darstellung der Abfolge von Dünnschichten als Strichcode erlaubt.

Gemäß einer weiteren Ausführungsform wird ein Strichcodeträgerpartikel vorgeschlagen, dessen Höhe und/oder Durchmesser kleiner als 10 µm, bevorzugt kleiner als 2 µm, insbesondere kleiner als 1 µm ist.

Vorteile einer derartigen Ausführungsform umfassen beispielsweise das Verbergen des Strichcodes vor dem Auge uneingeweihter Personen und potentieller Fälscher. Andererseits ermöglichen derart kleine Strichcodeträgerpartikel, dass auch kleine Werkstücke oder Komponenten zuverlässig gekennzeichnet werden können. Ebenso werden vorteilhaft nachfolgende Prozessschritte durch die Anwesenheit des Strichcodeträgerpartikels nicht beeinträchtigt. Beispielsweise kann das Einhalten eines bestimmten Fertigungsablaufes auf dem betreffenden Produkt lückenlos dokumentiert werden.

Gemäß einer weiteren Ausführungsform wird ein Strichcodeträger vorgeschlagen, wobei eine Ausdehnung des Strichcodes, rechtwinklig zur Anordnung der Striche gemessen und einer gemeinsamen Dicke benachbarter Schichten entsprechend, eine minimale Ausdehnung des Strichcodeträgers erreicht und/oder um den Faktor 2, bevorzugt um den Faktor 5 übersteigt. Mit anderen Worten formuliert, weist der Strichcodeträger in einer Orientierung die den Strichcode offenbart, ein Teilungsverhältnis von 1:1 bis 5:1 auf.

Vorteile dieser Ausführungsform betreffen die erleichterte maschinelle Auslesbarkeit des Strichcodes.

Gemäß weiterer Ausführungsformen umfassen die Dünnschichten zumindest ein Metall, zumindest ein Nitrid, zumindest ein Oxid und/oder zumindest eine organische oder anorganische Metallverbindung oder zumindest ein Polymer. Beispielsweise kann die Abfolge der Dünnschichten eine alternierende Abfolge von zwei Metallen, zwei Nitriden, zwei Oxiden oder zwei unterschiedlich geladenen Polymeren sein.

Vorteile dieser Ausführungsform ergeben sich aus deutlichen Materialkontrasten beispielsweise bei (rasterelektronenmikroskopischer) Analyse, die sich in einer deutlichen, beispielsweise schwarz/weiß darstellbaren, Bandstruktur äußern. Weiterhin sind für zahlreiche der benannten Materialklassen Plasmaabscheideverfahren bekannt. Solche Verfahren sind besonders geeignete die jeweils geforderten definierten Schichtdicken zu erzeugen und Schichtabfolgen auf einem Substrat zu generieren, die eine kodierte Information tragen oder als Strichcode-Information geeignet sind.

Besondere Vorteile einer entsprechenden Ausführungsform, bei der beide Stoffe ein Oxid oder ein Nitrid sind, ergeben sich fertigungstechnisch durch eine erleichterte Prozessführung. Wenn z.B. ein oxidischer Plasmaprozess genutzt wird, wäre z.B. der Aufbau alternierend angeordneter Schichten vorgebbarer Schichtdicke von TiO₂ (hohe Brechzahl) und SiO₂ (niedrige Brechzahl) möglich. Die entsprechende Plasmakammer wird dazu mit zwei Targets (Si und Ti) ausgestattet, benötigt aber nur ein Reaktivgas.

Hat die genutzte Plasmakammer nur ein Target (z.B. Si), so lassen sich bei vergleichsweise geringem Aufwand mit zwei unterschiedlichen Reaktivgasen Schichtfolgen von SiO₂ und Si₃N₄ herstellen. Diese beiden Materialien weisen beispielsweise stark unterschiedliche Brechungsindices auf. Aus der gut detektierbaren Bänderung vorliegender Schichtfolgen ergeben sich in Kombination mit definierten Schichtdicken maschinell auslesbare Strichcodes.

Soll eine Leitfähigkeitsauslesung, beispielsweise mittels Kelvin-Probe-AFM, erfolgen, so kann eines der genannten Dielektrika (SiO₂ und Si₃N₄) auch mit einem Metall kombiniert werden.

Soll eine magnetische Auslesung erfolgen, so lassen sich auch Metall-Metall Kombinationen, z.B. Nickel mit Aluminium nutzen. Beim Auslesen mittels Rasterelektronenmikroskopie (REM) ist es bei der Vielfalt etablierter Detektionsprinzipien nahezu gleichgültig, welche Materialien genutzt werden. Die einzige stets bedeutsame praktische Forderung stellt die Langzeitstabilität der verwendeten Stoffe im Kontakt miteinander dar. Beispielsweise soll bevorzugt keine Diffusion des einen Materials in das andere erfolgen. Auch sollen sich - auch bei eventueller Erwärmung unter den betriebsbedingten Nutzungsbedingungen, denen die Strichcodeträger jeweils ausgesetzt sind - keine Mischphasen herausbilden. Beides würde den Materialkontrast vermindern und den Code mit der Zeit unlesbar machen oder ganz zerstören. Bei geeignet markierten Polymeren kann beispielsweise eine hochauflösende Darstellung des Dünnschichtaufbaus mittels Fluoreszenzmikroskopie, z.B. mittels konfokaler Fluoreszenzmikroskopie, erfolgen. Dazu muss das inspizierte Strichcodeträgerpartikel nicht unbedingt mechanisch zerteilt werden.

Gemäß einer weiteren Ausführungsform umfasst eine erste Dünnschicht ein chemisches Element in elementarer Form und eine dazu benachbarte zweite Dünnschicht ist eine chemische Verbindung des Elements mit zumindest einem zweiten Element.

Vorteile ergeben sich aus der erleichterten Möglichkeit des Erzeugens kontrastreicher Bilder von Querschnittsflächen der Strichcodeträger und der daraus erwachsenden Möglichkeit fehlerfrei maschinenlesbarer Strichcodes in diesem für Strichcodes bisher unüblichen Größenbereich.

Gemäß einer weiteren Ausführungsform ist das zum Aufbau der Schichtfolge genutzte Element ausgewählt unter einem Metall oder einem Halbleiter und die zwischen Schichten des Elements angeordnete chemische Verbindung ist ausgewählt unter dessen Oxid, Nitrid oder Carbid.

Vorteile betreffen vor allem die erleichterte Fertigung derartiger Schichtfolgen mit Hilfe von Plasmaprozessen. Ein Substrat kann unter Verwendung eines Targets mit unterschiedlichen Reaktivgasen in ein und derselben Kammer beschichtet werden.

Gemäß einer weiteren Ausführungsform sind die den Strichcode ausbildenden zwei chemisch unterschiedlichen Stoffe ausgewählt unter zwei Carbiden, zwei Halbleitern, zwei Metallen, zwei Nitriden, zwei Oxiden oder unter Kombinationen eines Carbids, eines Halbleitern, eines Metalls, eines Nitrids und eines Oxids miteinander.

Auch hier ergeben sich beispielsweise Vorteile bezüglich der Fertigung der Strichcodeträger: Wechseltargets können alternierend in ein und derselben Plasmakammer genutzt werden.

Gemäß einer weiteren Ausführungsform ist der Strichcode auslesbar bei Verwendung eines bildgebenden Verfahrens, das ausgewählt ist unter Rasterkraftmikroskopie und/oder Elektronenmikroskopie, insbesondere unter Rasterelektronenmikroskopie.

Vorteile dieser Analysetechniken sind ihre hohe Auflösung und Automatisierbarkeit.

Gemäß einer weiter spezifizierten Ausführungsform umfasst das bildgebende Verfahren eine Rasterelektronenmikroskopie-Technik und basiert auf der Auswertung eines BSE-Signal und/oder eines EBSD-Signals.

Es sind hochauflösende automatisierte elektronenmikroskopische Analysen aus dem Erzbergbau (mineral liberation analysis) mit einem hohen Probendurchsatz bekannt. Bei geeigneter Anpassung sind diese Analysetechniken für die automatische Erfassung der Strichcodes einsetzbar.

Weiterhin wird ein Verfahren zur Kennzeichnung eines Erzeugnisses vorgeschlagen, das ein Befestigen eines Strichcodeträgerpartikels gemäß einer der vorstehend erläuterten Ausführungsformen auf dem Erzeugnis umfasst.

Vorteile ergeben sich für den Produkt- und Erzeugnisschutz, sowie für die verdeckte Rückverfolgbarkeit von Produkten, beispielsweise von Halbzeugen, umfassend eine im Produkt zu Tage tretende Funktionsbeschichtung. Wie bereits erläutert, können ebenso komplexe Prozessketten gesteuert und automatisiert überwacht werden.

Gemäß einer weiteren Ausführungsform des vorgeschlagenen Verfahrens umfasst das Befestigen ein Einbringen des partikelförmigen Strichcodeträgers in eine auf dem Erzeugnis zumindest abschnittsweise angeordnete Funktionsschicht. Solche Funktionsschichten sind beispielsweise ausgewählt unter: einer Schutzschicht, einem Finish, einer Hermetisierungsschicht, einer Antistatik-Beschichtung, einer Verschleißschutzschicht, einer Haftvermittlerschicht bzw. Primer-Schicht, einer Lackschicht, einer Folie, einem Film, einem Überzug oder einem Aufdruck.

Ein wesentlicher Vorteil dieser Art von Funktionsschichten ist deren weite Verbreitung. Nahezu jedes Produkt trägt eine Funktionsschicht. Werden in einer üblichen Funktionsschicht geeignete mikroskopische Strichcodeträgerpartikel angeordnet, so wird die Funktion der modifizierten Funktionsschicht nicht beeinträchtigt. Die vorgenommene Modifikation bleibt dem uneingeweihten Nutzer oder Händler verborgen (Szenario Sicherheitsmerkmal), oder ermöglicht eine durch die Kennzeichnung unbehinderte Prozessierung. Letzteres betrifft insbesondere kleinteilige und hochwertige Erzeugnisse, beispielsweise der Mikrosystemtechnik (Szenario Prozesskettenkontrolle). Damit kann das beschriebene Strichcodeträgerpartikel die ihm jeweils zugedachten Funktionen erfüllen.

Gemäß einer weiteren Ausführungsform wird ein Verfahren zur Erzeugung eines partikelförmigen Strichcodeträgers vorgeschlagen, der einen Strichcode gemäß der vorstehenden Ausführungsformen umfasst, wobei der Strichcode durch eine Abfolge von Dünnschichten jeweils spezifischer Dicke in einem Schichtverbund definiert ist. Das Verfahren umfasst den Schritt: Steuern eines Beschichtungsvorganges eines Substrates, sodass ein Querschnitt von alternierend aufgebrachten Schichten des Schichtverbundes, bei geeigneter Darstellung und/oder Vergrößerung betrachtet, einen durch Dicken der Schichten definiert einstellbaren Strichcode umfasst. Dabei entspricht eine Gesamtdicke des auf dem Substrat aufgebrachten Dünnschichtverbundes im Wesentlichen einer Ausdehnung des Strichcodes in Richtung einer Flächennormale des Substrats bzw. der Schichten des Strichcodecodeträgerpartikels. Die gesamte Dicke des Verbundes dünner Schichten, die den Strichcode repräsentiert, liegt typischerweise unterhalb von 10 µm, insbesondere unterhalb von 2 µm, bevorzugt unterhalb von 1 µm.

Vorteile ergeben sich insbesondere aus der Kleinheit der Strichcodeträger bei deren voller Funktionalität. Die Partikel sind einerseits nur für den Eingeweihten auffindbar und haben andererseits keinen oder nur äußerst geringen Einfluss auf die funktionalen Eigenschaften der Schicht, in der sie vorliegen.

Gemäß einem Beispiel nicht gemäß der beanspruchten Erfindung wird ein Verfahren zur Erzeugung eines Strichcodeträgerpartikels auf einem planaren Substrat vorgeschlagen. Dieses Verfahren umfasst weiter die folgenden Schritte: Lösen und/oder Trennen der Abfolge von Dünnschichten als Dünnschichtverbund vom Substrat und Zerkleinern des Strichcodeträgers in eine Vielzahl von Partikeln. Diese Vielzahl von Partikeln schließt solche Partikel ein, die bei Darstellung mit einer an die Kleinheit und stoffliche Zusammensetzung der Strichcodeträger angepassten Bildaufnahmeeinheit ein Abbild des Strichcodes zeigen. Es ist bevorzugt, dass die Vielzahl der Partikel einerseits nicht nur Partikelbruchstücke mit unvollständigen Strichcodes umfassen, sondern auch einzelne Partikeln mit einer vollständigen Schichtfolge. Weiter bevorzugt weist die Vielzahl der Partikel (Strichcodeträger) einen überwiegenden Anteil vereinzelter Partikel auf. Agglomerate und Aggregate der Partikeln sollen vermieden werden, um deren möglichst homogene Verteilung in der Funktionsschicht zu gewährleisten. Das schließt eine gute Dispergierbarkeit der Partikeln in einem Dispergiermittel ein.

Vorteile dieses Beispiels betreffen die Gewährleistung der Funktionalität der Strichcodeträgerpartikel.

Gemäß einer weiteren Ausführungsform wird ein Verfahren zur Erzeugung eines Strichcodeträgerpartikels auf einem Substrat vorgeschlagen, das ein Partikel ist. Bevorzugte Substratpartikel haben einen typischen Partikeldurchmesser zwischen 10 nm und 10 µm, bevorzugt zwischen 100 nm und 5 µm, insbesondere zwischen 500 nm und 1000 nm.

Vorteile dieser Ausführungsform ergeben sich daraus, dass das als Kern genutzte Partikel selbst als zusätzliches Unterscheidungsmerkmal einsetzbar ist. Beispielsweise ergibt die Erzeugung identischer Abfolgen von Dünnschichten auf unterschiedlichen Partikelsubstraten trotz identischen Strichcodes voneinander unterscheidbare Strichcodeträgerpartikel. Das erweitert die Anwendbarkeit der vorgeschlagenen Technologie, senkt die Herstellungskosten, steigert den Gehalt der Information des Strichcodeträgerpartikels. Ebenso können bei Verwendung weitestgehend monodisperser Substratpartikel weitestgehend monodisperse Strichcodeträgerpartikel hergestellt werden. Das ermöglicht eine erhöhte Präzision bei der Applikation der Strichcodeträgerpartikel auf einer Oberfläche, beispielsweise mittels Druckverfahren (z.B. Tintenstrahldruck).

Gemäß einer weiteren Ausführungsform umfasst das Verfahren zur Erzeugung eines Strichcodeträgerpartikels ein Spalten des Strichcodeträgerpartikels in zwei Strichcodeträgerpartikel, die jeweils die Abfolge von Dünnschichten L1, L2, L3, ... umfassen. Insbesondere weist zumindest eine Spaltfläche des gespaltenen Strichcodeträgerpartikels bei Darstellung mit einer geeigneten Bildaufnahmeeinheit den vollständigen Strichcode auf.

Vorteile dieser Ausführungsform sind mit den bereits benannten Vorteilen der konzentrisch um einen Kern abgeschiedenen Dünnschichtverbunde verknüpft: Die für monodisperse Partikelhaufwerke charakteristischen Fleißeigenschaften verbessern die technologische Handhabbarkeit der Strichcodeträgerpartikel. Die Spaltfläche offenbart nicht nur die Schichtfolge sondern bevorzugt auch den Kern des Schichtcodeträgerpartikels. Damit eröffnen sich die vorstehend genannten Möglichkeiten: Für unterschiedliche Kernmaterialien gleicher Größe können bei identischem Dünnschichtaufbau (d.h. identischem Strichcode) dennoch unterscheidbare Partikelcodeträger hergestellt werden, ohne umfangreiche Umrüstungen an der Beschichtungsanlage vornehmen zu müssen. Das erlaubt es, die Herstellungskosten der Schichtcodeträger zu senken. Zudem verdoppelt sich mit jedem Spaltvorgang die Partikelzahl, ohne dass die vom Strichcode getragene Information verlorengeht.

Gemäß einer weiteren Ausführungsform umfasst der genutzte Beschichtungsvorgang eine Plasmabeschichtung und/oder eine nasschemische Beschichtung, eine Layer-by-Layer-Beschichtung und/oder eine galvanische Schichtabscheidung.

Vorteile derartiger Beschichtungsverfahren ergeben sich aus der Möglichkeit diskret und präzise einstellbarer Einzelschichtdicken des Dünnschichtverbundes. Der Querschnitt des Dünnschichtverbundes umfasst eine Abfolge von Bändern mit einer herstellungstechnisch vorgebbaren Breite und umfasst einen über die Breite (Schichtdicke) codierten alphanumerischen Wert (Strichcode).

Gemäß einer anderen Ausführungsform wird ein Verfahren zur Verifizierung der Authentizität eines Erzeugnisses vorgeschlagen, das die Schritte umfasst:
- Bereitstellen eines Partikels, umfassend einen Strichcodeträger gemäß einem der Ansprüche 1 bis 11 in oder auf dem Erzeugnis;
- In-Verkehr-Bringen des Erzeugnisses;
- Untersuchen eines dem Verkehr entnommenen Erzeugnisses auf das Vorhandensein des Partikels und optionales Auslesen der vom Partikel mittels Strichcode kodierten Information;
- Bejahen oder Verneinen einer Frage nach der Authentizität des Erzeugnisses.

Vorteile bestehen beispielsweise in Möglichkeiten eines verbesserten Produktschutzes und der Bereitstellung von gerichtsfest verwertbaren Merkmalen, welche die Fälschungssicherheit von Erzeugnissen steigern. Dabei kann das "In-Verkehr-Bringen" ebenso das Einspeisen in einen komplexen Produktionsprozess bedeuten. Der Produktionsprozess wird so automatisch kontrollierbar. Dementsprechend wäre unter dem Bejahen oder Verneinen der Authentizität des gekennzeichneten Erzeugnisses dann die eineindeutige Identifikation des Erzeugnisses zu verstehen.

Gemäß einer Modifizierung dieses Verfahrens umfasst das Verfahren zusätzlich den Schritt:
- Abgleichen ausgelesener Information mit einer Datenbank.

Vorteile bestehen in der Beschleunigung von Verifizierungsmöglichkeiten, auch unter Nutzung von digitalen Netzwerken.

Gemäß einer weiteren Ausführungsform umfasst das erwähnte Bereitstellen den Schritt:
- zumindest abschnittsweises Einbringen einer Vielzahl von Partikeln in oder unter eine Funktionsbeschichtung des Erzeugnisses.

Wesentliche Vorteile bestehen in der universellen Anwendbarkeit der Strichcodetragenden Partikeln in allen nur erdenklichen Beschichtungen.

Gemäß einer weiteren Ausführungsform wird vorgeschlagen, die Strichcodeträger zur Kennzeichnung eines Halbzeugs, einer Komponente oder eines Werkstücks innerhalb eines Ablaufs von Prozessschritten zu verwenden. Die Verwendung umfasst die Schritte:
- Kennzeichnen des Halbzeugs, der Komponente oder des Werkstücks mit dem gemäß einem der Ansprüche 1 bis 11;
- Einbringen des gekennzeichneten Halbzeugs, der gekennzeichneten Komponente oder des gekennzeichneten Werkstücks in den Ablauf von Prozessschritten;
- Maschinelles Auslesen des vom Strichcodeträger getragenen Strichcodes;
- Zuordnen eines nächstfolgenden spezifischen Prozessschritts;
- Starten des nächstfolgenden spezifischen Prozessschritts.
Hierbei gewährleistet das Auslesen des Strichcodes und das damit ermöglichte zweifelsfreie Identifizieren eines erreichten Bearbeitungszustandes ein verwechslungsfreies Zuordnen des nächstfolgenden Prozessschritts innerhalb einer komplexen Abfolge von unterschiedlichen Prozessschritten.

Die Vorteile dieser Verwendung betreffen vorrangig die automatisierte Fertigung. Zu einem vergleichsweise gleichen Zweck eingesetzte RFIDs können auf Grund ihrer Größe häufig nur auf Verpackungen der verwendeten Halbzeuge, Komponenten oder Werkstücke befestigt werden. Mit den vorgeschlagenen Strichcodeträgern kann das betreffende Objekt selbst unmittelbar gekennzeichnet werden. Bevorzugt werden die Strichcodeträger maschinell lesbar auf einer Oberfläche des zu kennzeichnenden Objekts aufgebracht. Gewissermaßen stellt die vorgeschlagene Verwendung eine abgewandelte Form der zuvor beschriebenen Verifizierung der Authentizität eines Erzeugnisses, nämlich insbesondere die Feststellung der Identität eines Zwischenerzeugnisses dar. Das identifizierte Zwischenerzeugnis wird gemäß einer zum bestimmten Code hinterlegten Information weiter bearbeitet. Hier steht nicht die Fälschungssicherheit, sondern das Vermeiden einer ungewollten Verwechslung im Vordergrund. Beides betrifft im Grunde genommen vergleichbare und ähnliche Sachverhalte. Dementsprechend kann das vorgeschlagene Verfahren entsprechend der oben angeführten Varianten erweitert werden.

Die beschriebenen Ausführungsformen können beliebig miteinander kombiniert werden.

Wie dargestellt, ist der Code nach dem Prinzip eines Strichcodes aufgebaut und auf der Oberfläche und/oder einer Schnittfläche von Partikeln angeordnet. Diese neuartigen Partikel weisen typische Dimensionen von einigen Hundert Nanometern bis wenigen Mikrometern auf. Sie werden hier als Strichcodeträger, insbesondere als Strichcodeträgerpartikel bezeichnet.

Der bei geeigneter Darstellung des Strichcodeträgerpartikels maschinell auslesbare Code ist ein Strichcode, der durch parallel oder konzentrisch angeordnete Dünnschichten repräsentiert wird. Anwendungen umfassen einerseits das Gebiet von Sicherheitstechnologien, insbesondere die verdeckte Markierung von Erzeugnissen. Andererseits umfassen potentielle Anwendungen die automatisierte Fertigung, insbesondere die Identifikationsprüfung von Baugruppen und/oder verschiedenen Fertigungszuständen eines Erzeugnisses.

Während das erste Szenario Aspekte im Bereich des Produktschutzes und der Echtheitszertifizierung betrifft, betrifft das zweite Anwendungsszenario die Überwachung und fehlerfreie Identifikation von Werkstücken oder Komponenten während komplexer Fertigungsabläufe.

In jedem Fall ermöglichen die vorgeschlagenen submikroskopischen Strichcode- oder Ringcode-Träger eine produktinhärente Kennzeichnung zur Identifikation, Spezifikation und/oder zur Authentifizierung und ermöglichen beispielsweise den Schutz vor Produktpiraterie, die Erkennung von Plagiaten an Hand einer fehlenden verdeckten oder unkorrekten Markierung bzw. die verwechslungsfreie Erkennung eines Produktes oder Zwischenproduktes in automatisierten Fertigungsprozessen.

In diesem Zusammenhang wird unter einem Strichcode, Balkencode, Streifencode oder Barcode in Anlehnung an eine Definition in der freien Enzyklopädie "Wikipedia"-https://de.wikipedia.org/wiki/Strichcode - eine optoelektronisch lesbare Schrift verstanden, die aus verschieden breiten, parallel oder konzentrisch zueinander angeordneten Strichen/Ringen besteht. Der Begriff Code steht dabei typischerweise nicht für die Verschlüsselung, sondern für die Abbildung von Daten. Dabei können nicht ausschließlich Zahlen, sondern ebenso auch andere Zeichen durch eine Streifen- bzw. Ringfolge, d. h. die Abfolge verschieden breiter Bänder und deren Zwischenräume kodiert sein. Die Daten des partikulär vorliegenden Strich- bzw. Ringcodes werden typischerweise mit einer angepassten Bilderfassungseinheit, insbesondere Lesegeräten, wie z. B. Barcodelesegeräten (Scanner) oder Kameras, maschinell erfasst und elektronisch weiterverarbeitet. Gemäß bevorzugten Ausführungsformen erfüllt vorliegend ein entsprechend eingerichtetes Mikroskop, ggf. ergänzt um eine entsprechende Software, die Funktion der Bilderfassungseinheit bzw. des Lesegerätes.

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen entsprechend ähnliche Teile.
- Figur 1: zeigt schematisch die Herstellung eines submikroskopischen Strichcode-Trägers mit Hilfe eines planaren Substrates. Dieser Strichcode-Träger betrifft nicht eine Ausführung gemäß der beanspruchten Erfindung, sondern betrifft ein Beispiel das das Verständnis der Erfindung erleichtert.
- Figur 2: zeigt schematisch eine erfindungsgemäße Herstellung von Strichcodeträgern auf Partikelsubstraten.

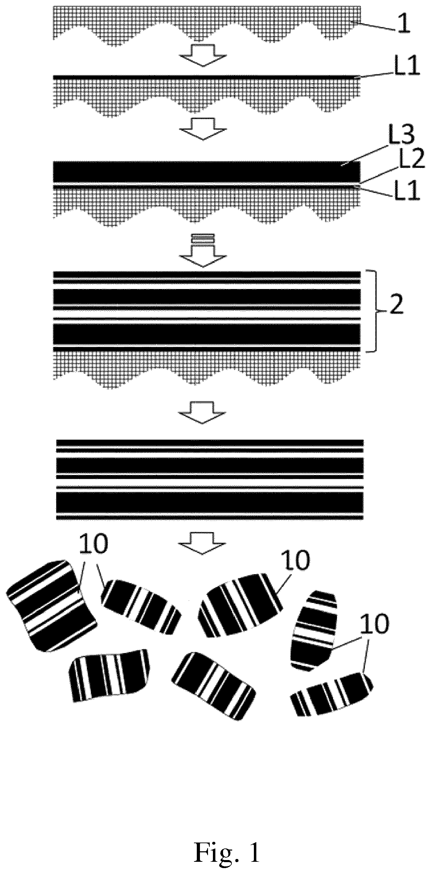

Insbesondere zeigt Fig. 1, wie ein Substrat 1 zunächst mit einer ersten Schicht L1 versehen wird. Anschließend werden auf dieser ersten Schicht L1 weitere nachfolgende Schichten L2, L3 ... usw. definierter Dicke und stofflicher Zusammensetzung abgeschieden bzw. aufgebracht, bis ein Schichtstapel 2 bekannten Aufbaus vorliegt. Bevorzugt werden die verwendeten Materialien alternierend aufgebracht. Beispielsweise können SiO₂- und Si₃N₄-Schichten aber auch SiO₂- und TiO₂- Schichten oder beliebige Paare hinreichend unterschiedlicher Materialien jeweils definierter Dicken einander abwechseln, die von Schicht zu Schicht fortlaufend jeweils den Strichen und den Zwischenräumen zwischen benachbarten Strichen/Ringen entsprechen.

Vorteilhafterweise unterscheiden sich aneinander angrenzende Schichten des Schichtstapels 2 hinsichtlich wenigstens einer Eigenschaft. Beispielsweise können alle geradzahligen Schichten L2, L4, L6 usw. ein Material umfassen, dass hinsichtlich eines Merkmals, beispielsweise einer Dichte und/oder einer optischen Eigenschaft und/oder einer physikalischen oder chemischen Eigenschaft (z.B. Kristallstruktur, Brechzahl, o.ä.) und/oder hinsichtlich der Konzentration eines vorherrschenden Elements (Ordnungszahl) mit der gewählten Nachweistechnik mühelos von dem alle nicht geradzahligen Lagen umfassenden Material L1, L3, L5 etc. unterscheidbar darstellbar ist. Zur Unterscheidung der Schichten wird bei den hier in's Auge gefassten typischen Schichtdicken im nm- und sub-Mikrometer- und/oder Mikrometerbereich vorzugsweise ein elektronenmikroskopisches Inspektionsverfahren, beispielsweise die Rasterelektronenmikroskopie, verwendet.

Zur Herstellung von Strichcode tragenden Partikeln wird der auf einem planaren Substrat erzeugte Schichtstapel gebrochen, sodass zahlreiche, mehr oder weniger gleichgroße Partikel 10, umfassend den Schichtaufbau des Schichtstapels 2, vorliegen. Dazu kann der Schichtstapel entweder erst vom Substrat abgelöst / getrennt werden oder auf dem Substrat der Zerkleinerung zugeführt werden.

Die Herstellung von Strichcodeträgern ist jedoch nicht auf die Verwendung allein von planaren Substraten begrenzt. Unter einem Substrat werden sowohl Objekte verstanden, die eine planare Oberfläche aufweisen - wie beispielsweise Wafer, Folien oder Platten, aber auch mikroskopisch kleine Partikel subsummiert.

Auf planaren Substraten abgeschiedene, durch ihre jeweilige Dicke den gewünschten Code darstellende Schichtfolgen müssen zur Erzeugung der vorgeschlagenen Strichcodeträger zerkleinert werden (vgl. Fig. 1). Erst danach stehen sie als Partikel zur Verfügung und können zur Kennzeichnung eines Erzeugnisses verwendet werden. Sie sind nach Freilegung einer die Schichtfolge umfassenden Bruchfläche direkt auslesbar.

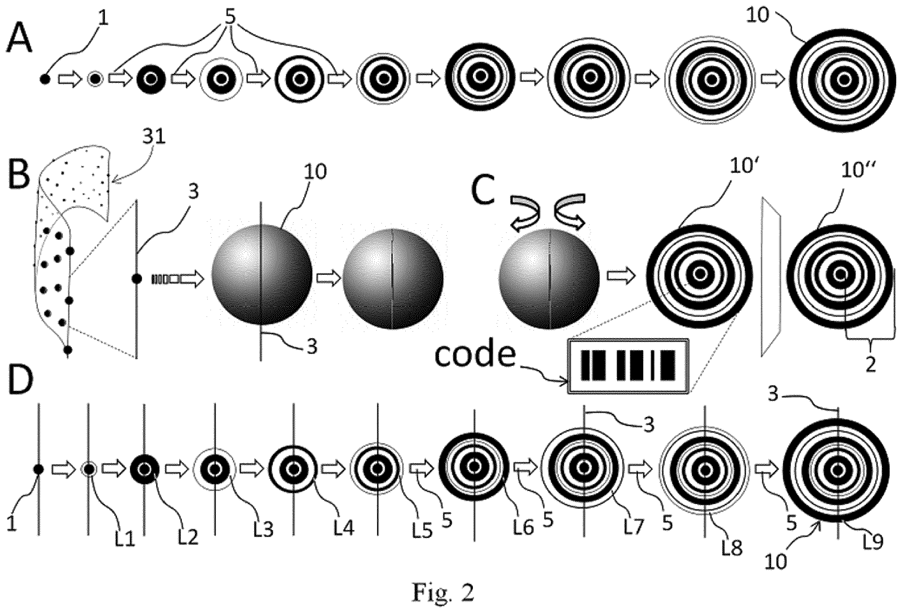

Das gilt nicht für konzentrische Abfolgen individueller Schichten auf einem Partikel-Kern, die durch ihre jeweilige Dicke den gewünschten Code darstellen. Die auf partikulären Substraten erhaltenen Strichcodeträger müssen vor ihrer Verwendung zur Kennzeichnung eines Erzeugnisses nicht unbedingt zerkleinert werden. Sie liegen bereits in Partikelform vor. Allerdings müssen sie vor dem Auslesen halbiert oder bis zum Kern angeschnitten werden, um die gesamte Schichtfolge als Code interpretieren zu können (vgl. Fig. 2).

Zunächst soll die Erzeugung von Codeträgern auf planaren Substraten beschrieben werden. Soll ein auf dem planaren Substrat erzeugte Schichtstapel vom Substrat abgelöst werden, so kann das unter Verwendung einer auf dem unbeschichteten Substrat aufgebrachten Trennschicht erfolgen. Vorzugsweise löst sich die Trennschicht beispielsweise in einem bestimmten Lösungsmittel. Ebenso kann sie sich beispielsweise bei einer bestimmten Temperatur verflüssigen oder verdampfen. In diesem Fall bleibt das planare Substrat erhalten und steht für eine erneute Beschichtung zur Verfügung.

Gemäß einem Beispiel zum Erleichtern des Verständisses der Erfindung kann eine glatt gespannte Folie als planares Substrat verwendet werden. Nach dem Abschluss der Beschichtungsvorgänge kann eine solche Folie entfernt werden. Die Folie kann nass- oder trockenchemisch entfernt werden, beispielsweise weggeätzt oder mit einem Lösungsmittel aufgelöst werden.

Gemäß einem weiteren Beispiel zum Erleichtern des Verständisses der Erfindung wird die Beschichtung der Folie in einem kontinuierlichen Prozess, beispielsweise in einem Rolle-zu-Rolle-Verfahren ("Reel-to-Reel") vorgenommen. Ebenso kann die Beschichtung des Substrates aber auch diskontinuierlich erfolgen. Geeignete Anlagen zur Durchführung der Beschichtung sind aus der einschlägigen Beschichtungstechnologie bekannt und basieren, beispielsweise, auf einer Abscheidung aus der Gasphase (CVD), einer Lasergestützten Abscheidung, beispielsweise LE-CVD, einer anderweitig physikalisch gestützten Gasphasenabscheidung (PE-CVD), einer Bedampfung, einer atomic layer deposition (ALD), einer nasschemischen Beschichtung - außenstromlos oder galvanisch bzw. einem Plating-Verfahren, einer layer-by-layer (LbL) Beschichtungstechnik oder ähnlichem.

Vorteilhafterweise unterscheiden sich die alternierend aufgebrachten Materialien hinsichtlich einer Ordnungszahl, einer chemischen Zusammensetzung (Element, Verbindung), einer Kristallstruktur (einer Kristallphase, z.B. kubisch flächenzentriert - fcc) gegenüber einer anderen Kristallstruktur (z.B. kubisch raumzentriert - bcc). Weiterhin unterscheiden sich die Schichten typischerweise zumindest teilweise hinsichtlich ihrer Stärke (Dicke, Schichtdicke), die ja beim Auslesen des Strich- bzw. Ringcodes eines Partikels einer Strichstärke eines typischen Strichcodes entspricht. Das ist für die mit den vorgeschlagenen Strichcode-Trägern erreichbare Informationstiefe und ihre Eignung als Strichcode-Träger bedeutsam.

Die Frage der Auf-Skalierung entsprechender Verfahren zu Produktionszwecken der einen Strichcode tragenden Submikrometer-Partikeln ist vergleichsweise einfach lösbar. Bereits heute werden mit gängigen Halbleitertechnologien präzise definierte Schichtabfolgen unterschiedlicher Materialien im Nanometerbereich auf Substraten mit Durchmessern von 6, 8 und 12 Zoll routinemäßig realisiert. Typischerweise werden dabei Toleranzen im Nanometerbereich über die gesamte Fläche des Substrats eingehalten. Einer kostengünstigen Produktion auch großer Losgrößen der Partikel steht so prinzipiell nichts im Wege. Ähnlich hohe Genauigkeiten einer ggf. mehrlagigen Beschichtung weitaus größerer Substrate werden beispielsweise bei der Beschichtung von Flachglasscheiben (Floatglas) realisiert. Typischerweise werden hier nur wenige Nanometer starke Schichten mit einer Toleranz von ± 0,5 nm über eine Substratbreite von bis zu 3,50 m erzeugt.

Zur Zerkleinerung eines vom planaren Substrat abgelösten Schichtstapels kann beispielsweise ein Schlagwerk, ein Mahlwerk, eine Walze, insbesondere eine korrugierte Walze oder Ultraschall verwendet werden. Ebenso können die beschriebenen Verfahren miteinander verknüpft und/oder kombiniert werden. Vorteilhafterweise wird das gebrochene Schichtmaterial klassiert und von Anteilen befreit, die keinen vollständigen Code mehr tragen. Ebenso können die vereinzelten Partikel in einem Dispergiermittel dispergiert werden oder zumindest teilweise beschichtet werden, um die Fließfähigkeit des Materials zu erhöhen, ein Verklumpen oder statische Aufladung zu vermeiden oder das Benetzungsverhalten zu steuern.

Gemäß alternativen nicht erfindungsgemässen Beispiele zum Erleichtern des Verständisses der Erfindung kann die Zerkleinerung des den Strichcode repräsentierenden Schichtstapels bzw. des Schichtverbundes auch erfolgen, ohne dass das Substrat entfernt wird, bzw. ohne den Schichtstapel zuvor vom Substrat abzulösen.

Beispielsweise kann dazu der Schichtaufbau L1/L2/L3/L4... auf einem nur wenige µm starken und spröden Substrat erfolgen. Ein nachfolgendes Brechen führt zu einer effektiven Zerkleinerung. Die erhaltene Masse kann dann nasschemisch so behandelt werden, dass sich ausschließlich das Substrat löst und beispielsweise in einem flüssigen Zwei-PhasenSystem (flüssig-flüssig) abgeschieden werden kann.

Jedoch ist es für die angestrebt homogene Verteilung der erhaltenen Partikel bzw. der Strichcodeträger in jedem Falle wünschenswert, die Bildung von Partikel-Aggregaten und/oder -Agglomeraten zu unterbinden. Dem Fachmann sind Verfahren bekannt, um eine Partikel-Agglomeration zu unterbinden und die Fließfähigkeit der erhaltenen Pulver zu steigern. Derartige Pulver können dann beim Auftragen einer Funktionsschicht auf das zu kennzeichnende Produkt eingeblasen oder eingerührt werden.

Neben den beschriebenen Verfahren zur schichtweisen Herstellung des submikroskopischen Barcodes (beispielsweise mittels PVD- und CVD-Verfahren) auf einer im Wesentlichen ebenen Unterlage mit nachfolgender Vereinzelung kann die Erzeugung alternierender Schichten, deren Abfolge und jeweilige Dicke einen Strichcode repräsentiert, ebenso konzentrisch, um Nano- oder Mikropartikel herum erfolgen. Im Ergebnis eines solchen Beschichtungsvorganges entsteht eine mehrlagige Partikelstruktur, die im Querschnitt gewissermaßen einer quer halbierten Zwiebel ähnelt und hier als Ringcode-Struktur bezeichnet wird.

Nachfolgend soll die erfindungsgemäße Herstellung von Codeträgern auf partikulären Substraten (Substratpartikeln) beschrieben werden. Das Prinzip der Herstellung von Strichcodeträgern, bzw. von Ringcodeträgern auf einem mikroskopisch kleinen Partikel ist in Fig. 2 gezeigt. Hierbei dient typischerweise ein sphärisches Nano-Partikel als Substrat 1. Geeignete Partikel sind, beispielsweise als Cluster, Mikrokristallite oder Polymerpartikel kommerziell erhältlich. Gezeigt ist das allmähliche konzentrische Anwachsen eines Durchmessers des Ringcodeträgers während seiner Herstellung. Die aufeinander folgenden Schichten L1, L2, L3 etc., bzw. der Schichtstapel 2 auf dem partikulären Substrat 1 erfüllen - im Querschnitt betrachtet - die Funktion von Balken bzw. Abständen (Lücken) zwischen solchen, die gemeinsam - als Abfolge gelesen, den Strichcode ergeben. Ein konzentrisch auf einem zentralen Partikel aufgebauter Strichcode wird hier anschaulich als Ringcode bezeichnet. Gelesen wird er in radialer Richtung, also entlang einer Flächennormale zur Oberfläche des Partikels, wie ein aus parallel zueinander angeordneten Balken aufgebauter Strichcode.

Das Teilbild A bzw. Fig. 2A zeigt die beispielsweise in freier Suspension schrittweise nacheinander erfolgende Schichtabscheidung 5, die zum fertigen Strichcodeträger 10 bzw. Ringcodeträger 10 führt.

Das Teilbild B bzw. Fig. 2B zeigt ein in eine mit Nanopartikeln 1 versehene Membran 3. Die Nanopartikelmembran 31 umfasst also einen Abschnitt einer Membran 3 bzw. einen Dünnfilm 3 und darin eingelagerte Nanopartikel 1. Im Querschnitt betrachtet vermittelt eine solche Folie den Eindruck einer Perlenkette. Wie in der Vergrößerung rechts neben der Nanopartikelmembran 31 ersichtlich, ist das Partikelsubstrat 1 von beiden Seiten der Folie 3 zugänglich.

Wird die mit Partikeln versehene Folie beidseitig alternierend mit geeigneten Schichtbildnern mit einer jeweils den Code bestimmenden Dicke beschichtet, beispielsweise mittels LBL-Technik oder galvanisch, so wird die Folie danach die fertigen Strichcodeträger 10 tragen. Das ist schematisch im Teilbild D bzw. in Fig. 2D gezeigt. Die Abfolge einzelner Schichtabscheidungsprozesse 5 zur Erzeugung aufeinander haftender Schichten L1, L2, L3, L4, L5, L6, L7, L8, L9 ergibt einen Strichcodeträger 10 umfassend konzentrisch fest aufeinander haftende Schichten L1 .... L9. Die Zahl der Schichten ergibt sich aus dem gewünschten Codesystem, ihre jeweilige individuelle Dicke bzw. die Stärke der "Balken" und die Dicke von Abständen zwischen den "Balken", bzw. die Dicke entsprechender Zwischenschichten entspricht den jeweils kodierten Zeichen.

Wird die Folie 3 entfernt, beispielsweise aufgelöst oder weggeätzt, so wird ein Partikel 10 erhalten, das in einer Äquatorialebene eine umlaufende Störstelle (ggf. in Form einer Nut) aufweist. Das ist rechts in Fig. 2B und im Teilbild C bzw. in Fig. 2C zeigt.

Fig. 2C zeigt schematisch, wie durch vollständiges Entfernen der Folie 3 und ggf. zusätzliche mechanische Belastung der vom Schichtstapel 2 gebildete Code freigelegt werden kann: Die Partikeln 10 zerfallen - ähnlich einer geknackten Walnuss - entlang der vorgegebenen Störstelle in zwei Hälften, die jeweils einen Strichcodeträger 10' und 10" umfassen.

Ebenso können in eine Funktionsschicht eingebettete noch vollständig als sphärische Partikeln 10 vorliegende Ringcodeträger mittels gängiger Verfahren abgetragen bzw. zerschnitten werden, um den Code freizulegen. Das kann beispielsweise mittels Mikrotomie vor dem Mikroskopieren oder mittels Ionenstrahl-Ätzen während des Mikroskopierens einer die Partikel enthaltenden Probe mit einem Zweistrahlmikroskop (FIB-REM) erfolgen.

Wird dabei ein derartiges Partikel angeschnitten, beispielsweise unter Verwendung eines Mikrotoms oder durch gezieltes Ionenätzen mit einem fokussierten Ionenstrahl (FIB), kann die Schichtstruktur analysiert, und kodierte Daten der Ringcode-Struktur ausgelesen werden.

Hierbei ist anzumerken, dass die sinnvolle Verwendung eines EBSD-Detektors bei der Rasterelektronenmikroskopie ohnehin eine hochplane Probenoberfläche erfordert. Eine solche hochplane Oberfläche, umfassend einen Querschnitt durch zumindest ein den Barcode repräsentierendes Partikel kann bevorzugt mittels lokalisiert präzisem Ionenätzen mit einem fokussierten Ionenstrahl erhalten werden. Das entsprechende zum forensischen Nachweis genutzte Gerät kann beispielsweise ein handelsübliches Zweistrahl-Elektronenmikroskop (FIB-REM) sein.

Beispielsweise kann aber auch eine Bruchfläche einer Beschichtung, die erwartungsgemäß den gesuchten Strichcodeträger enthält, direkt der Analyse im Rasterelektronenmikroskop unterzogen werden. So kann an Hand der Präsenz eines spezifischen Codes die Echtheit des Produkts nachgewiesen werden. Voraussetzung der Auslesbarkeit des Codes ist dann das Schneiden wenigstens eines sphärischen Partikels durch seinen Kern, bzw. die Trennung entlang einer "Äquatorial-Ebene". Analog hierzu kann der Strichcode eines auf einem planaren Substrat erhaltenen Strichcodeträgers ebenso nach dessen Anschnitt mittels fokussiertem Ionenstrahl ausgelesen werden, wenn die im REM untersuchte Probe entsprechend orientiert wird, sodass der Schichtstapel 2 in seiner vollen Ausdehnung sichtbar wird.

Die zur Produktkennzeichnung verwendeten Strich- bzw. Ringcodes können zur Fixierung einer EAN-Nummer, einer Batch-Nummer, einer Verifikations-Nummer oder Auftragsnummer oder ähnlichen produktspezifischen Daten genutzt werden. Das bevorzugte Strichcode-System hängt von der erforderlichen Informationstiefe ab. Dementsprechend kann die Dicke der aufeinander folgend parallel zueinander bzw. konzentrisch umeinander angeordneten Schichten so eingestellt sein, dass der vorliegende Strichcode bzw. Ringcode beispielsweise ausgewählt ist unter: einem sogenannten EAN-13-Strichcode, umfassend 13 Stellen, davon eine Prüfziffer; einem sogenannten EAN-8-Strichcode, umfassend 8 Stellen, davon eine Prüfziffer; einem sogenannten UPC-A-Strichcode, umfassend 12 Stellen, davon eine Prüfziffer; einem anderen normierten Strichcode, wie beispielsweise UPC-B, -C, oder -D; einem sogenannten UPC-E-Strichcode, der die Komprimierung von 11 Nutzziffern (wie im Übrigen auch UPC-A) in einen 8-stelligen Strichcode definiert, wenn die Nutzziffern bestimmte Folgen von Nullen enthalten; einem sogenannten IAN-Strichcode (International article numbering barcode), der identisch mit dem EAN-Strichcode ist bzw. inhaltlich mit dem EAN-Strichcode abgestimmt ist; einem JAN-Strichcode (Japanese article numbering) oder einen zumindest zweistelligen Zusatzcode umfasst, die typischerweise direkt neben dem EAN oder UPC angeordnet sind. Ebenso kann der Code z.B. auch eine Authentifizierungsnummer, eine Verifikationsnummer oder einen Schlüssel für das Auslesen eines externen nicht produktgebundenen Codes zum Beispiel in Frachtpapieren umfassen. Im Übrigen kann der Code auch andersartig definiert sein, umfasst jedoch typischerweise eine Abfolge von zumindest 5, typischerweise mehr als 8, bevorzugt mehr als 11, insbesondere zumindest 18 oder 20 bis 120 jeweils stoffschlüssig benachbarter Schichten.

Vorteilhafterweise erscheinen bei der bildgebenden Darstellung eines Profils (Querschnitts) eines Schichtstapels bzw. der Schichtringstruktur kontrastreiche Querschnittsflächen bzw. deutlich ausgeprägte Materialkontraste. Die Querschnittsfläche erscheint bei geeigneter Darstellung als gebänderte Struktur. Typischerweise werden die Bilderfassungsparameter der Bildaufnahmeeinheit (z.B. Rasterelektronenmikroskop z.B. mit EBSD-, BSE- oder EDX-Detektor) so eingestellt, dass Materialkontraste als Hell-Dunkel-Kontrast, beispielsweise als schwarz/weiß-Kontraste oder als unterscheidbare Grauwerte erscheinen. Bei Nutzung eines geeigneten Rasterelektronenmikroskops lässt sich der Querschnitt (Anschnitt, Bruchkante) eines derartigen Schichtstapels beispielsweise entweder direkt als schwarz/weiß-Kontrast darstellen oder erscheint, nach geeigneter Bildbearbeitung der von einem Detektor erfassten Signale, beispielsweise von rückgestreuten Elektronen, als solcher. Das erleichtert die direkte Auslesbarkeit einer vom Strichcode dargestellten Zeichenfolge.

Ebenso können optische, insbesondere fluoreszenzoptische Abbildungsverfahren zur Analyse entsprechender Dünnschichtverbunde herangezogen werden. Fluoreszenzoptische Messverfahren sind für ihre hohe Ortsauflösung bekannt. Ebenso kann eine angepasste Schichtabfolge unterschiedlicher kristalliner Struktur aber gleicher chemischer Zusammensetzung bei Analyse im polarisierten Licht eine hell/dunkel-Bänderung ergeben, die als Strichcode geeignet ist.

Eine weitere charakteristische Eigenschaft der vorgeschlagenen Schichtstapel 2 ist die im Wesentlichen über die gesamte Ausdehnung des Schichtstapels aufrechterhaltene Konstanz eines Verhältnisses der Dicke der einzelnen Schichten zueinander. Auf diese Art und Weise ergibt ein beliebiger, den Kern erfassender Querschnitt den vollständigen Schichtaufbau bzw. maschinell auslesbaren Code (vgl. Fig. 2C "code"). Da bei einer digitalen Vergrößerung einer Schnittansicht das Verhältnis der Schichtdicken zueinander unverändert bleibt, bleibt auch der Code erhalten und ist bei geeigneter Vergrößerung durch ein geeignet eingerichtetes Bilderfassungssystem automatisch fehlerfrei auslesbar.

Ziel der vorliegend beschriebenen Maßnahmen ist eine abschnittsweise (lokal) oder global stochastisch verteilte unmittelbar mit dem Produkt verbundene Informationsspeicherung mit mikroskopisch oder submikroskopisch kleinen Strichcodeträgern. Die Strichcodeträgerpartikel können insbesondere in Beschichtungen oder Verklebungen eingebracht werden. Derartige Beschichtungen oder Verklebungen weist fast jedes Produkt ohnehin auf. So wird die Funktionsfähigkeit des gekennzeichneten Produktes nicht eingeschränkt.

Die Implementierung der Partikel in die Schicht kann unmittelbar während des Beschichtungs- oder Klebeprozesses des Produktes, also nicht nachträglich oder zusätzlich auf dem Produkt erfolgen. Damit sind die Strichcodeträger Bestandteil des Produktes, der jeweiligen Funktionsschicht oder einer Beschichtung. Auf Grund der Schichtinhärenz des Merkmals wäre ein Herauslösen der Identifikation bzw. Information (z.B. EAN Nummer oder Schlüssel für den Code eines Frachtpapiers) damit mit einem sichtbaren Ablösen bzw. dem Zerstören / Verletzen der Schicht verbunden. Ebenso kann die Implementierung auch durch Aufdruck an definierter Position erfolgen.

Ein wesentlicher Vorteil des beschriebenen Prinzips der unverwechselbaren Kennzeichnung eines Produktes ergibt sich daraus, dass die Markierung bzw. das Vorliegen der Partikeln in einem Abschnitt der Beschichtung erfolgt, der dem Uneingeweihten verborgen bleibt. Beispielsweise können die Strichcodeträger nur an einem bestimmten Abschnitt einer Funktionsbeschichtung oder in einer Fügefläche (Klebkante) eingebracht sein. Diese Lokalisation ist nur dem Eingeweihten bekannt.

Gemäß einem anderen Anwendungsszenario ergibt sich ein Vorteil daraus, dass einzelne Zwischenstufen eines Erzeugnisses maschinenlesbar gekennzeichnet werden können. So können Verwechslungen innerhalb automatischer Fertigungslinien vermieden und komplexe Prozessabfolgen exakt eingehalten werden. Beispielsweise können in diesem Fall die Strichcodeträger an einem bestimmten Abschnitt einer Funktionsbeschichtung angeordnet sein. Diese Lokalisation wird von einer automatischen Auslesevorrichtung automatisch angefahren und der Code ausgelesen. Erst danach erfolgt die jeweilige weitere Prozessierung.

Die Anwendbarkeit der beschriebenen mikroskopischen und submikroskopischen Strichcode-Träger als Echtheitsmerkmal ist kaum begrenzt. Sie betrifft hochwertige und hochpreisige Einzelerzeugnisse genauso wie Massenartikel und reicht bspw. von Werkzeugen (Bohrer mit Härteschicht), über Brillengläser, Armbanduhren (-Gehäuse), Lederartikel, Stoffe, Textilien, CDs, DVDs, Leuchtmittel (z.B. LED und LED-Leuchten), Verguss- und/oder Verkapselungsmassen, beispielsweise elektronischer Baugruppen und Schaltkreise, über Fahrzeugersatzteile (für Automobile oder Luftfahrzeuge), Gehäuseteile von Computerzubehör, von Maschinen und von Anlagen, Fahrrädern, Fahrradersatzteilen, Motorrädern, Motorradersatzteilen, Automobilen und deren Teilen, bis zu großtechnischen Anlagen. Ein Aufzählen von speziellen Anwendungsbeispielen gemäß dem zweiten Szenario, d. h. der verwechslungsfreien automatischen Identifikation von Werkstücken und Erzeugnissen in komplexen mehrstufigen Fertigungsabläufen soll unterbleiben, da Anwendungsmöglichkeiten unbegrenzt zu sein scheinen. Anwendungen betreffen beispielsweise die Fertigung elektronischer, optoelektronischer oder mikrosystemtechnischer Komponenten. Ebenso sind beispielsweise Anwendungen im Werkzeugmaschinenbau oder im Fahrzeugbau möglich.

Beschriebene Partikeln umfassend einen Strich- bzw. Ringcode können eingesetzt werden, um die Echtheit eines damit verdeckt markierten Erzeugnisses zu belegen, bzw. eine Nachahmung - sei sie auch äußerlich noch so gut - als solche zu erkennen.

Vorteile können sich beispielsweise für die Gewährleistung der vom Originalhersteller zugesicherten Zuverlässigkeit ergeben. Sicherheitsrelevante Aspekte, beispielsweise die Betriebssicherheit einer Maschine, eines Motors, eines Luftfahrzeugs betreffende Fragen der Zuverlässigkeit, können auf Grund des Echtheitsnachweises gerichtsfest konstatiert werden. Das ergibt sich daraus, dass von einem gefälschten Produkt nicht automatisch die dem Original zuzuschreibenden Eigenschaften zuzuordnen sind.

Im Zweifel kann bei einer grenzüberschreitenden Warenlieferung eine entsprechend informierte Stelle die Echtheit eines Erzeugnisses ermitteln.

Ebenso kann die Einhaltung einer lizenzvertraglich vereinbarten Losgröße kontrolliert werden. Wenn beispielsweise eine Firma x eine Lizenz für die Herstellung von y Stück Produkten erteilt, abweichend vom Vertrag aber 10y Produkte, zum Beispiel in einer "Zwillingsfabrik" hergestellt werden und auf den Markt gelangen, so ist das mit Hilfe des vorgeschlagenen partikulären Strichcodes bzw. des darauf basierenden Verfahrens nachweisbar: Beispielsweise wären durch Lieferung der vertraglich vereinbarten Anzahl von authentischen, mit Strich-/Ringcode markierten/codierten Zulieferteile, Typenschilder etc. zusätzliche Produkte identifizierbar. Derartige Fragestellungen werden als "Overrun-Problematik" bezeichnet.

Eine weitere, die Fälschungssicherheit des mit dem Verbundpartikel markierten Produkts erhöhende, Maßnahme ergibt sich daraus, dass der in einer Beschichtung partikulär dispergiert vorliegende Strichcode so gewählt werden kann, dass sein Auslesewert mit einer Nummer der Fracht- oder Lieferpapiere übereinstimmt. Entsprechende Beschichtungen sind beispielsweise eine Härteschicht eines Bohrers, umfassen den Randbereich eines Brillenglases, einen Gehäuseabschnitt einer Armbanduhr, eine Applikation oder Schicht auf einem Modeartikel, ein Logo, den Sockel eines Leuchtmittels, eine Lackierung oder einen simplen Farbfleck auf einem Fahrzeug(ersatz)teil.

Wie bereits erläutert ist die Anwendbarkeit der Strichcodeträger zur Kennzeichnung von Werkstücken, Halbzeugen oder Zwischenprodukten bei der automatischen Fertigung genauso nahezu unbegrenzt.

Aus den vorstehenden Erläuterungen ergeben sich typische Merkmale des vorgeschlagenen Systems zur verdeckten Kennzeichnung von Erzeugnissen.

Erstens werden submikroskopische plattenförmige Partikel, in Analogie zu Glimmer bzw. Schiefer-Partikeln derart hergestellt, dass sie parallel zur Partikelnormalen (der Platte/Scheibe) einen Schichtaufbau von zwei hinreichend unterschiedlichen Materialien (Metall, Dielektrikum, Halbleiter) aufweisen. Die verwendeten unterschiedlichen Materialien dienen der Ausbildung eines Kontrasts, beispielsweise eines hell/dunkel - Kontrasts, der geeignet darstellbar ist. Die Dicke der jeweiligen Schichten dient der Zeichenzuweisung, analog zum klassischen Barcode. Die Schichtanzahl bzw. die Schichtdicke richtet sich nach dem jeweils genutzten Barcode-System. Wenn zum Beispiel eine dünne Einzelschicht eine Schichtdicke von 10 nm, eine dicke eine Schichtdicke von 20 nm aufweist und z.B. jeweils 10 Schichten verwendet würden, ergäbe sich eine Gesamtschichtdicke von 300 nm, was dann der Dicke des Schichtstapels entspräche. Sowohl Einzelschichten L1, L2, L3 ...als auch der Querschnitt einer Gesamtschicht bzw. Schichtstapel 2 sind mittels REM, mittels AFM, beispielsweise mittels Raster-Kelvin-Sonden-Technik (KPM, KPFM, SKP) oder mittels spezieller optischer Verfahren, beispielsweise mittels optischer Nahfeldmikroskopie (scanning near field optical microscopy / SNOM) auflösbar.

Zweitens werden diese Partikel entweder global stochastisch verteilt oder lokal stochastisch verteilt in - ggf. ohnehin aufgebrachte - Beschichtungen eingebracht. Das erfolgt bevorzugt unmittelbar während des Beschichtungsprozesses des Erzeugnisses mit einer betreffenden Funktionsschicht. Die Größe der Partikel als mikroskopische und submikroskopische Partikel - das heißt Partikel typischer Abmessung im Mikrometer- und Submikrometer-Bereich - ergibt sich zumindest für Dünnschichtsysteme aus der jeweils vorliegenden maximalen Schichtdicke. Gemäß bevorzugten Ausführungsformen überschreiten die Abmessungen eines Partikels im Regelfall nicht ein Zehntel der Dicke der Schicht, in welche sie zumindest abschnittsweise eingetragen werden, um deren Funktionalität nicht zu beeinträchtigen, denn die eingebrachten Partikel können in gewisser Weise Störstellen der Beschichtung darstellen. Alternativ können sie, um eine Unterbrechung der Schicht zu verhindern, auch unterhalb einer Funktionsschicht, beispielsweise als oder in einer Zwischenschicht eingebracht werden. Eine Möglichkeit der Einbringung umfasst dann beispielsweise das Einbringen in eine Haftvermittlungsschicht, bzw. Primer-Schicht. Dabei ist die jeweilige Beschichtungstechnik irrelevant: Die Partikel können bei einer Tauchbeschichtung, bei einer Schleuderbeschichtung, bei einer Sprühbeschichtung oder mittels elektrostatisch basierter Beschichtungsverfahren zumindest abschnittsweise in oder unter die jeweilige Funktionsschicht eingetragen oder injiziert werden.

Drittens werden die Partikel selbst mit Dünnschichttechnik hergestellt. Mindestens zwei verschiedene Materialien werden abwechselnd mit definierter Schichtdicke (z.B. definiert dick vs. definiert dünn) entsprechend der gewählten Codierung auf ein Trägersubstrat aufgebracht, so dass das gesamte Schichtsystem im Querschnitt ein dem Strichcode entsprechender Codeträger ist. Nach erfolgtem Beschichtungsprozess wird das Substrat abgelöst (z. B. unter Verwendung einer Trennschicht) oder weggeätzt (z.B. wenn als Substrat eine Folie diente). Im Ergebnis erhält man einen makroskopischen Film, der im Querschnitt Code-Träger ist und weiter vereinzelt werden kann, z.B. durch Mahlen.

Wichtig ist dabei, dass die Haftung der Code-tragenden Schichten untereinander besser ist, als die Bruchfestigkeit des Gesamtsystems. So wird erreicht, dass jedes Bruchstück unabhängig von seiner Größe die gesamte Information trägt.

Das vorgeschlagene Prinzip der Informationskodierung und der Kennzeichnung von Erzeugnissen basiert somit typischerweise auf submikroskopischen Partikeln, die im Querschnitt eine material- und schichtdickenbasierte Barcodeinformation enthalten. Insbesondere wird die Herstellung dieser Partikeln mittels Dünnschichttechnik und Zergliederung, beispielsweise in einem Mahl- oder Schlagwerk vorgeschlagen. Weiterhin wird die Verwendung der submikroskopischen Barcode-Träger (Partikel) in ohnehin notwendigen bzw. in ohnehin vorgesehenen Beschichtungen durch Eintrag in die zur Beschichtung verwendeten Produkte (Anstrichstoffe, Farben, Lacke, Überzüge, Folien, Funktionsbeschichtungen / Funktionsschichten, Fasern, Gewebe etc.) vorgeschlagen. Ebenso werden angepasste Ausleseverfahren, z.B. Elektronenmikroskopie, Rasterkraftmikroskopie (atomic force microscopy / scanning probe microscopy / AFM / SPM), konfokale Fluoreszenzmikroskopie und verwandte hochauflösende Messverfahren zum Auslesen der Schichtfolge, bzw. des Strich-Codes der Partikel, vorgeschlagen.

Wesentliche Vorteile der vorgeschlagenen mikroskopischen oder submikroskopischen Strichcode-Träger (bzw. Mikro- und/oder Submikrometer messenden Partikel, umfassend einen Strichcode) ergeben sich daraus, dass der Strichcode inhärent und global stochastisch verteilt in oder auf einem zu kennzeichnenden Erzeugnis ein- bzw. aufgebracht werden kann und so untrennbar mit dem jeweiligen Erzeugnis verbunden ist.

Vorteilhafterweise ermöglicht die vorgeschlagene Verwendung von Partikeln, die einen submikroskopischen Strichcode tragen, eine gerichtsfeste forensische Markierung. Ebenso ermöglichen sie individuelle Kennzeichnung und verwechslungsfreie Identifikation von Erzeugnissen und Werkstücken.

Komplexe Information kann untrennbar ohne einen sonderlich aufwendigen Prozessschritt mit dem jeweils zu markierenden Erzeugnis verbunden werden. Dazu werden die betreffenden Partikel beispielsweise bei laufender Beschichtung eingeblasen bzw. injiziert. Ebenso können sie aber auch vorab in eine schichtausbildende Masse eingebracht und darin weitestgehend homogen verteilt werden.

Gegenüber den eingangs erwähnten SECUTAGs, weisen die hier vorgeschlagenen Strichcodeträgerpartikel die nachfolgend aufgeführten Unterschiede auf:
1. Der zur Erzeugung der Partikel dienende Schichtaufbau erfolgt mittels Dünnschichttechnik statt Dickschichttechnik;
2. Es wird ein Strichcode statt eines Farbcodes eingesetzt; der Code kann auch konzentrisch als Ringcode ausgebildet sein;
3. Typische Abmessungen der Partikel liegen im submikroskopischen statt im mikroskopischen Bereich;
4. Die den Code tragenden Partikel können global verteilbar statt lokalisiert aufgebracht sein;
5. Die Partikel werden in Schichten bzw. in Produkte eingebracht, statt auf Schichten bzw. Produkte aufgebracht:
6. Es wird eine forensische Nachweistechnik statt einfacher mikroskopischer Nachweistechnik genutzt;
7. Der vorliegende Strichcode ermöglicht die Speicherung einer zusätzlichen (codierten) Information gegenüber der reinen, an Hand eines Farbmusters erreichten Produktidentifikation;
8. Die Herstellung erfolgt mittels Dünnschichttechnik und ist Substrat-gestützt, wobei wahlweise ein Wegätzen/Ablösen des Substrats erfolgt, im Unterschied zum komplett mittels Lamination erreichten Aufbau der Schicht unter der Verwendung von Dickschichttechnik.

Gegenüber gebräuchlichen anorganischen Interferenzpigmenten bzw. Effektpigmenten unterscheiden sich die Strichcodeträgerpartikel einerseits durch ihre Größe. Im Wesentlichen sind sie kleiner als die genannten Pigmente. Zum anderen unterscheiden sie sich durch den definierten Aufbau. Im Querschnitt ergibt die Schichtfolge bei geeigneter Darstellung einen maschinell auslesbaren durch seine Herstellung vorgebbaren Strich- bzw. Ringcode.

## Patentansprüche

1. Sphärisches Strichcodeträgerpartikel (10', 10"), umfassend einen Verbund von zumindest fünf konzentrisch zueinander um einen Kern angeordneten Dünnschichten (L1, L2, L3 ...) verschiedener vorbestimmter Dicke, wobei sich zwei benachbarte Dünnschichten (L1/L2; L2/L3; L3/L4;...) in einer maschinell auslesbaren Eigenschaft unterscheiden, sodass ein Querschnitt durch den Verbund der konzentrisch zueinander um den Kern angeordneten Dünnschichten eine Abfolge (2) von Strichen verschiedener vorbestimmter Breite entlang einer Flächennormale des Kerns ergibt, die einen Strichcode repräsentiert, und die Dünnschichten (L1, L2, L3...) im Querschnitt eine material- und schichtdickenbasierte Barcodeinformation enthalten.

2. Strichcodeträgerpartikel nach Anspruch 1, wobei die maschinell auslesbare Eigenschaft auf einer Wechselwirkung von Photonen, Elektronen und/oder Röntgenstrahlung mit den Dünnschichten basiert.

3. Strichcodeträgerpartikel nach Anspruch 1 oder 2, wobei die maschinell auslesbare Eigenschaft ausgewählt ist unter und/oder zurückführbar ist auf:
Absorption, Brechungsindex, chemische Zusammensetzung, Dichte, Dielektrizitätsindex, elektrische Leitfähigkeit, Elektronenbeugung, Elektronendichte, Emission, Fluoreszenz, Fluoreszenzquantenausbeute, Kristallinität, Kristallstruktur, magnetische Susceptibilität, Polarisation, Reflektivität, Transmission zumindest einer der Dünnschichten.

4. Strichcodeträgerpartikel nach einem der vorstehenden Ansprüche, wobei die Dünnschichten umfassen: ein Metall, ein Nitrid, ein Oxid und/oder eine organische oder anorganische Metallverbindung, ein Polymer.

5. Strichcodeträgerpartikel nach einem der vorstehenden Ansprüche, wobei eine erste Dünnschicht ein chemisches Element in elementarer Form umfasst und eine benachbarte zweite Dünnschicht eine chemische Verbindung des Elements mit zumindest einem zweiten Element umfasst.

6. Strichcodeträgerpartikel nach Anspruch 5, wobei das Element ausgewählt ist unter einem Metall oder einem Halbleiter und die chemische Verbindung ausgewählt ist unter einem Oxid, einem Nitrid oder einem Carbid.

7. Strichcodeträgerpartikel nach einem der vorstehenden Ansprüche, wobei der Strichcode umfasst: ein Carbid; einen Halbleiter; ein Metall; ein Nitrid oder ein Oxid.

8. Strichcodeträgerpartikel nach einem der vorstehenden Ansprüche, wobei der Strichcode auslesbar ist mit einem bildgebenden Verfahren ausgewählt unter: Rasterkraftmikroskopie und/oder Elektronenmikroskopie, insbesondere unter Rasterelektronenmikroskopie.

9. Strichcodeträgerpartikel nach Anspruch 8, wobei das bildgebende Verfahren Rasterelektronenmikroskopie umfasst und auf einem BSE-Signal und/oder auf einem EBSD-Signal basiert.

10. Strichcodeträgerpartikel nach einem der vorstehenden Ansprüche, wobei der Kern ausgewählt ist unter einem Cluster, einem Mikrokristallit oder einem Polymerpartikel.

11. Strichcodeträgerpartikel nach einem der vorstehenden Ansprüche, wobei eine Spaltfläche des Strichcodeträgerpartikels den Kern und eine Abfolge (2) von Dünnschichten verschiedener vorbestimmter Dicke aufweist.

12. Verfahren zur Kennzeichnung eines Erzeugnisses, umfassend das Befestigen eines Strichcodeträgerpartikels (10', 10") gemäß einem der Ansprüche 1 bis 11, in oder auf dem Erzeugnis.

13. Verfahren gemäß Anspruch 12, wobei das Befestigen ein Einbringen des Strichcodeträgerpartikels (10', 10") in eine auf dem Erzeugnis zumindest abschnittsweise angeordnete Funktionsschicht umfasst, wobei die Funktionsschicht ausgewählt ist unter: einer Schutzschicht, einem Finish, einer Hermetisierungsschicht, einer Antistatik-Beschichtung, einer Verschleißschutzschicht, einer Haftvermittlerschicht bzw. Primer-Schicht, einer Lackschicht, einer Folie, einem Film, einem Überzug oder einem Aufdruck.

14. Verfahren zur Erzeugung eines Strichcodeträgerpartikels (10', 10") gemäß zumindest einem der Ansprüche 1 bis 11, umfassend die Schritte:
- Steuern eines Beschichtungsvorganges (5) des Kerns (1), sodass ein Querschnitt durch die konzentrisch angeordneten Dünnschichten (L1, L2, L3, ...) entlang einer Flächennormale des Kerns (1) bei geeigneter Darstellung und/oder Vergrößerung ausgelesen, eine Abfolge (2) von Strichen vorbestimmter Breite ergibt, die einen vorbestimmbaren Strichcode repräsentiert, wobei die Dünnschichten (L1, L2, L3...) im Querschnitt eine material- und schichtdickenbasierte Barcodeinformation enthalten, und wobei eine Gesamtdicke des Verbundes von konzentrisch angeordneten Dünnschichten (L1, L2, L3, ...) auf dem Kern im Wesentlichen einer Ausdehnung des Strichcodes in Richtung einer Flächennormale des Dünnschichtverbundes entspricht, und typischerweise unterhalb von 10 µm liegt.

15. Verfahren nach Anspruch 14, wobei der Kern einen Durchmesser zwischen 100 nm und 5 µm, oder zwischen 500 nm und 1000 nm aufweist.

16. Verfahren nach Anspruch 15, weiter umfassend:
- Spalten des Strichcodeträgerpartikels (10) in zwei Strichcodeträgerpartikel (10', 10"), umfassend die Abfolge (2) von Dünnschichten (L1, L2, L3, ...), sodass eine Spaltfläche bei Darstellung mit einer geeigneten Bildaufnahmeeinheit den vollständigen Strichcode aufweist.

17. Verfahren nach einem der Ansprüche 14 bis 16, wobei der Beschichtungsvorgang Schritte umfasst, ausgewählt unter einer Plasmabeschichtung und/oder einer nasschemischen Beschichtung und/oder einer galvanischen Schichtabscheidung und/oder einer Layer-by-Layer-Beschichtung.

18. Verfahren zur Verifizierung der Identität eines Erzeugnisses, umfassend:
- Bereitstellen eines Strichcodeträgerpartikels gemäß einem der Ansprüche 1 bis 11 in oder auf dem Erzeugnis;
- In-Verkehr-Bringen des Erzeugnisses;
- Untersuchen eines dem Verkehr entnommenen Erzeugnisses auf das Vorhandensein des Partikels und optionales Auslesen der vom Partikel mittels Strichcode kodierten Information;
- Bejahen oder Verneinen einer Frage nach der Authentizität des Erzeugnisses.

19. Verfahren nach Anspruch 18, weiter umfassend:
- Abgleichen ausgelesener Information mit einer Datenbank.

20. Verfahren nach Anspruch 18, wobei das Bereitstellen umfasst:
- zumindest abschnittsweises Einbringen einer Vielzahl von Strichcodeträgerpartikeln in oder unter eine Funktionsbeschichtung des Erzeugnisses.

21. Verwendung eines Strichcodeträgerpartikels gemäß einem der Ansprüche 1 bis 11, zur Kennzeichnung eines Halbzeugs, einer Komponente oder eines Werkstücks innerhalb eines Ablaufs von Prozessschritten, umfassend:
- Kennzeichnen des Halbzeugs, der Komponente oder des Werkstücks mit dem Strichcodeträgerpartikel;
- Einbringen des gekennzeichneten Halbzeugs, der gekennzeichneten Komponente oder des gekennzeichneten Werkstücks in den Ablauf von Prozessschritten;
- Maschinelles Auslesen des vom Strichcodeträgerpartikel getragenen Strichcodes;
- Zuordnen eines nächstfolgenden spezifischen Prozessschritts;
- Starten des nächstfolgenden spezifischen Prozessschritts;
wobei das Strichcodeträgerpartikel ein verwechslungsfreies Zuordnen des nächstfolgenden Prozessschritts einer komplexen Abfolge von unterschiedlichen Prozessschritten gewährleistet.

22. Funktionsschicht, umfassend ein Strichcodeträgerpartikel (10', 10") gemäß einem der Ansprüche 1 bis 11, wobei das Strichcodeträgerpartikel in der Funktionsschicht eingebettet vorliegt, sodass ein Strichcode erst unter Verwendung eines Mikrotoms oder mittels eines Ionenätzens freilegbar ist und mittels einer Elektronenmikroskopie auslesbar ist, wobei die Funktionsschicht ausgewählt ist unter: einer Schutzschicht, einem Finish, einer Hermetisierungsschicht, einer Antistatik-Beschichtung, einer Verschleißschutzschicht, einer Haftvermittlerschicht oder einer Primer-Schicht, einer Lackschicht oder einem Aufdruck.

## Claims

1. A spherical barcode carrier particle (10', 10"), comprising a composite of at least five thin layers (L1, L2, L3, etc.) of differing predetermined thicknesses disposed concentrically with respect to each other around a core, wherein two adjacent thin layers (L1/L2; L2/L3; L3/L4; etc.) differ from each other in a machine-readable property, so that a cross section through the composite of the thin layers disposed concentrically with respect to each other around the core produces a sequence (2) of bars with different predetermined widths along a normal to the surface of the core, which represents a barcode, and the thin layers (L1, L2, L3, etc.) in cross section contain barcode information which is based on the material and layer thickness.

2. The barcode carrier particle as claimed in claim 1, wherein the machine-readable property is based on an interaction of photons, electrons and/or X-rays with the thin layers.

3. The barcode carrier particle as claimed in claim 1 or claim 2, wherein the machine-readable property is selected from and/or ascribable to: absorption, refractive index, chemical composition, density, dielectric constant, electrical conductivity, electron diffraction, electron density, emission, fluorescence, fluorescence quantum yield, crystallinity, crystal structure, magnetic susceptibility, polarization, reflectivity, transmission of at least one of the thin layers.

4. The barcode carrier particle as claimed in one of the preceding claims, wherein the thin layers comprise: a metal, a nitride, an oxide and/or an organic or inorganic metallic compound, a polymer.

5. The barcode carrier particle as claimed in one of the preceding claims, wherein a first thin layer comprises a chemical element in the elemental form and an adjacent second thin layer comprises a chemical compound of the element with at least one second element.

6. The barcode carrier particle as claimed in claim 5, wherein the element is selected from a metal or a semiconductor and the chemical compound is selected from an oxide, a nitride or a carbide.

7. The barcode carrier particle as claimed in one of the preceding claims, wherein the barcode comprises: a carbide; a semiconductor; a metal; a nitride or an oxide.

8. The barcode carrier particle as claimed in one of the preceding claims, wherein the barcode can be read with an imaging technique selected from: scanning force microscopy and/or electron microscopy, in particular from scanning electron microscopy.

9. The barcode carrier particle as claimed in claim 8, wherein the imaging technique comprises scanning electron microscopy and is based on a BSE signal and/or an EBSD signal.

10. The barcode carrier particle as claimed in one of the preceding claims, wherein the core is selected from a cluster, a microcrystallite or a polymer particle.

11. The barcode carrier particle as claimed in one of the preceding claims, wherein a cleavage surface of the barcode carrier particle comprises the core and a sequence (2) of thin layers with differing predetermined thicknesses.

12. A method for identifying a product, comprising attaching a barcode carrier particle (10', 10") as claimed in one of claims 1 to 11 in or on the product.

13. The method as claimed in claim 12, wherein the attachment comprises introducing the barcode carrier particle (10', 10") into a functional layer disposed on at least a section of the product, wherein the functional layer is selected from: a protective layer, a finish, a sealing layer, an antistatic coating, a wear protection layer, a bonding agent layer or primer layer, a paint layer, a foil, a film, a coating or an imprint.

14. A method for producing a barcode carrier particle (10', 10") as claimed in at least one of claims 1 to 11, comprising the following steps:
- controlling a procedure (5) for coating the core (1) in a manner such that a cross section through the concentrically disposed thin layers (L1, L2, L3, etc.) along a normal to the surface of the core (1), when displayed and/or magnified appropriately, produces a sequence (2) of bars of predetermined widths which represents a predeterminable barcode, wherein in cross section, the thin layers (L1, L2, L3, etc.) contain barcode information based on the material and layer thickness, and wherein a total thickness of the composite of concentrically disposed thin layers (L1, L2, L3, etc.) on the core essentially corresponds to the barcode extending in the direction of a normal to the surface of the thin layer composite, typically over less than 10 µm.

15. A method as claimed in claim 14, wherein the core has a diameter in the range 100 nm to 5 µm, or in the range 500 nm to 1000 nm.

16. The method as claimed in claim 15, further comprising:
- cleaving the barcode carrier particle (10) into two barcode carrier particles (10', 10") comprising the sequence (2) of thin layers (L1, L2, L3, etc.), so that when displayed with a suitable image acquisition unit, a cleavage surface presents the complete barcode.

17. The method as claimed in one of claims 14 to 16, wherein the coating procedure comprises steps selected from a plasma coating and/or a wet chemical coating and/or a galvanic coating deposition and/or a layer-by-layer coating.

18. A method for verifying the identity of a product, comprising:
- providing a barcode carrier particle as claimed in one of claims 1 to 11 in or on a product;
- bringing the product into circulation;
- testing a product taken from circulation as to the presence of the particle and optionally reading the information encoded by means of a barcode in the particle;
- confirming or negating an inquiry as to the authenticity of the product.

19. The method as claimed in claim 18, further comprising:
- synchronizing the read information with a database.

20. The method as claimed in claim 18, wherein the provision comprises:
- at least in sections, introducing a plurality of barcode carrier particles into or under a functional coating of the product.

21. Use of a barcode carrier particle as claimed in one of claims 1 to 11, for the identification of a semi-finished product, a component or a workpiece during the course of a sequence of process steps, comprising:
- identifying the semi-finished product, component or workpiece with the barcode carrier particle;
- introducing the identified semi-finished product, the identified component or the identified workpiece into the sequence of process steps;
- machine reading the barcode carried by the barcode carrier particle;
- assigning a following specific process step;
- starting the following specific process step;
wherein the barcode carrier particle ensures unambiguous assignment of the following process step of a complex sequence of different process steps.

22. A functional layer comprising a barcode carrier particle (10', 10") as claimed in one of claims 1 to 11, wherein the barcode carrier particle is embedded in the functional layer, so that a barcode can only be exposed using a microtome or by means of ion etching and can be read by electron microscopy, wherein the functional layer is selected from: a protective layer, a finish, a sealing layer, an antistatic coating, a wear protection layer, a bonding agent layer or primer layer, a paint layer or an imprint.

## Revendications

1. Particule de support de code à barres sphérique (10', 10"), comprenant un ensemble d'au moins cinq couches minces (L1, L2, L3...) d'épaisseur prédéfinie différente, agencées de manière concentrique les unes par rapport aux autres autour d'un noyau, dans laquelle deux couches minces (L1/L2 ; L2/L3 ; L3/L4 ;...) voisines se distinguent par une propriété lisible par machine, de sorte qu'une coupe transversale à travers l'ensemble des couches minces agencées de manière concentrique les unes par rapport aux autres autour du noyau permet d'obtenir une succession (2) de barres d'une largeur prédéfinie différente le long d'une normale à la surface du noyau, qui représente un code à barres, et les couches minces (L1, L2, L3...) contiennent en coupe transversale une information de code à barres basée sur l'épaisseur du matériau et de la couche.

2. Particule de support de code à barres selon la revendication 1, dans laquelle la propriété lisible par machine se base sur une interaction de photons, d'électrons et/ou d'un rayon X avec les couches minces.

3. Particule de support de code à barres selon la revendication 1 ou 2, dans laquelle la propriété lisible par machine est sélectionnée parmi et/ou peut être ramenée à :
l'absorption, l'indice de réfraction, la composition chimique, la densité, la constante diélectrique, la conductivité électrique, la diffraction des électrons, la densité électronique, l'émission, la fluorescence, le rendement quantique de fluorescence, la cristallinité, la structure cristalline, la susceptibilité magnétique, la polarisation, la réflectivité, la transmission d'au moins une des couches minces.

4. Particule de support de code à barres selon l'une quelconque des revendications précédentes, dans laquelle les couches minces comportent : un métal, un nitrure, un oxyde et/ou un composé métallique organique ou anorganique, un polymère.

5. Particule de support de code à barres selon l'une quelconque des revendications précédentes, dans laquelle une première couche mince comporte un élément chimique sous forme élémentaire et une deuxième couche mince voisine comporte un composé chimique de l'élément avec au moins un deuxième élément.

6. Particule de support de code à barres selon la revendication 5, dans laquelle l'élément est sélectionné parmi un métal ou un semi-conducteur et le composé chimique est sélectionné parmi un oxyde, un nitrure ou un carbure.

7. Particule de support de code à barres selon l'une quelconque des revendications précédentes, dans laquelle le code à barres comporte : un carbure ; un semi-conducteur ; un métal ; un nitrure ou un oxyde.

8. Particule de support de code à barres selon l'une quelconque des revendications précédentes, dans laquelle le code à barres peut être lu au moyen d'un procédé d'imagerie sélectionné parmi : la microscopie à force atomique et/ou la microscopie électronique, en particulier parmi la microscopie électronique à balayage.

9. Particule de support de code à barres selon la revendication 8, dans laquelle le procédé d'imagerie comporte la microscopie électronique à balayage et se base sur un signal BSE et/ou sur un signal EBSD.

10. Particule de support de code à barres selon l'une quelconque des revendications précédentes, dans laquelle le noyau est sélectionné parmi un agrégat, une micro-cristallite ou une particule polymère.

11. Particule de support de code à barres selon l'une quelconque des revendications précédentes, dans laquelle une surface de division de la particule de support de code à barres présente le noyau et une succession (2) de couches minces d'une épaisseur prédéfinie différente.

12. Procédé d'identification d'un produit, comprenant la fixation d'une particule de support de code à barres (10', 10") selon l'une quelconque des revendications 1 à 11, dans ou sur le produit.

13. Procédé selon la revendication 12, dans lequel la fixation comporte l'introduction de la particule de support de code à barres (10', 10") dans une couche fonctionnelle agencée au moins en partie sur le produit, dans lequel la couche fonctionnelle est sélectionnée parmi : une couche de protection, un apprêt, une couche d'hermétisation, un revêtement antistatique, une couche de protection contre l'usure, une couche adhésive ou une couche de fond, une couche de vernis, une feuille, un film, une pellicule ou une impression.

14. Procédé de production d'une particule de support de code à barres (10', 10'') selon au moins l'une des revendications 1 à 11, comprenant les étapes :
- de commande d'une procédure de revêtement (5) du noyau (1), de sorte qu'une coupe transversale à travers les couches minces (L1, L2, L3...) agencées de manière concentrique, le long d'une normale à la surface du noyau (1), lue avec une représentation et/ou un agrandissement adaptés, permet d'obtenir une succession (2) de barres d'une largeur prédéfinie, qui représente un code à barres pouvant être prédéfini, dans lequel les couches minces (L1, L2, L3...) contienent en coupe transversale une information de code à barres basée sur l'épaisseur du matériau et de la couche, et
dans lequel une épaisseur totale de l'ensemble de couches minces (L1, L2, L3...) agencées de manière concentrique sur le noyau correspond sensiblement à une étendue du code à barres en direction d'une normale à la surface de l'ensemble de couches minces, et est habituellement inférieure à 10 µm.

15. Procédé selon la revendication 14, dans lequel le noyau présente un diamètre compris entre 100 nm et 5 µm, ou entre 500 nm et 1 000 nm.

16. Procédé selon la revendication 15, comprenant en outre :
- la division de la particule de support de code à barres (10) en deux particules de support de code à barres (10', 10"), comprenant la succession (2) de couches minces (L1, L2, L3...), de sorte qu'une surface de division, lorsqu'elle est représentée au moyen d'une unité d'acquisition d'image adaptée, présente l'intégralité du code à barres.

17. Procédé selon l'une quelconque des revendications 14 à 16, dans lequel la procédure de revêtement comporte des étapes, sélectionnées parmi un revêtement par plasma et/ou un revêtement chimique par voie humide et/ou une galvanoplastie et/ou un revêtement couche par couche.

18. Procédé de vérification de l'identité d'un produit, comprenant :
- la fourniture d'une particule de support de code à barres selon l'une quelconque des revendications 1 à 11 dans ou sur le produit ;
- la commercialisation du produit ;
- l'analyse d'un produit retiré du commerce à la recherche de la présence de la particule et la lecture éventuellement de l'information codée par la particule au moyen d'un code à barres ;
- une réponse affirmative ou négative à une question concernant l'authenticité du produit.

19. Procédé selon la revendication 18, comprenant en outre :
- la comparaison de l'information lue à une base de données.

20. Procédé selon la revendication 18, dans lequel la fourniture comprend :
- l'introduction au moins en partie d'une pluralité de particules de support de code à barres dans ou sous un revêtement fonctionnel du produit.

21. Utilisation d'une particule de support de code à barres selon l'une quelconque des revendications 1 à 11, pour l'identification d'un demi-produit, d'un composant ou d'une pièce pendant un déroulement d'étapes de processus, comprenant :
- le fait de rendre le demi-produit, le composant ou la pièce identifiable au moyen de la particule de support de code à barres ;
- l'introduction du demi-produit rendu identifiable, du composant rendu identifiable ou de la pièce rendue identifiable dans le déroulement des étapes de processus ;
- la lecture par machine du code à barres porté par la particule de support de code à barres ;
- l'attribution d'une étape de processus spécifique suivante ;
- le démarrage de l'étape de processus spécifique suivante ;
dans lequel la particule de support de code à barres garantit une attribution exempte de confusion de l'étape de processus suivante d'une succession complexe de différentes étapes de processus.

22. Couche fonctionnelle, comprenant une particule de support de code à barres (10', 10") selon l'une quelconque des revendications 1 à 11, dans laquelle la particule de support de code à barres est intégrée dans la couche fonctionnelle, de sorte qu'un code à barres ne peut être libéré qu'au moyen d'un microtome ou au moyen d'une gravure ionique et ne peut être lu qu'au moyen d'une microscopie électronique, dans laquelle la couche fonctionnelle est sélectionnée parmi : une couche de protection, un apprêt, une couche d'hermétisation, un revêtement antistatique, une couche de protection contre l'usure, une couche adhésive ou une couche de fond, une couche de vernis ou une impression.
